# EUROPÄISCHE PATENTSCHRIFT

(11) **EP 2 691 003 B1**
(45) Veröffentlichungstag und Bekanntmachung des Hinweises auf die Patenterteilung: **25.11.2015**
(21) Anmeldenummer: 12713037.5
(22) Anmeldetag: 27.03.2012
(51) Int. Cl.: A47L 9/28

(54) **VERFAHREN ZUM SAUGDRUCKABHÄNGIGEN BETREIBEN EINES STAUBSAUGERS**
METHOD FOR SUCTION-PRESSURE-DEPENDENT OPERATION OF A VACUUM CLEANER
PROCÉDÉ POUR FAIRE FONCTIONNER UN ASPIRATEUR EN FONCTION DE LA PRESSION D'ASPIRATION

(30) Priorität: 31.03.2011 DE 102011006541
(43) Veröffentlichungstag der Anmeldung: 05.02.2014
(73) Patentinhaber: BSH Hausgeräte GmbH, 81739 München (DE)
(72) Erfinder: KASTNER, Julian, 97656 Oberelsbach (DE); SCHMITT, Florian, 97702 Münnerstadt (DE)
(86) Internationale Anmeldenummer: PCT/EP2012/055407
(87) Internationale Veröffentlichungsnummer: WO 2012/130842

(56) Entgegenhaltungen:
- EP-A1- 0 379 680
- EP-A2- 1 997 412
- US-B1- 6 255 792

## Beschreibung

### Hintergrund der Erfindung

Die Erfindung betrifft ein Verfahren zum Betreiben eines Staubsaugers, bei welchem
- der Ist-Wert des Saugdrucks im Saugkanal gemessen
- und mit einem Soll-Wert des Saugdrucks verglichen wird
- und die Leistung des Sauggebläses so geregelt wird, dass eine Änderung des Ist-Werts des Saugdrucks in Richtung des Soll-Werts des Saugdrucks erfolgt,
- und der Soll-Wert des Saugdrucks in Abhängigkeit von dem geforderten Saugauftrag eingestellt wird.

Bei der Saugreinigung, beispielsweise von Bodenbelägen, können in Abhängigkeit von den Oberflächeneigenschaften des zu reinigenden Gegenstands sehr unterschiedliche Anforderungen an die Saugleistung des Staubsaugers gestellt werden. Bei glatten, unnachgiebigen Bodenbelägen kann eine hohe Saugleistung eingestellt werden, ohne dass die Saugdüse nennenswert in die Oberfläche eindringt. Bei nachgiebigen Untergründen hingegen ist ein Eindringen der Saugdüse in die Oberfläche durch den an dieser anliegenden Unterdruck möglich, welches zu einer erheblichen Erhöhung der zum Schieben der Saugdüse erforderlichen Kräfte führen kann. Es sind daher Lösungen bekannt, den Unterdruck im Saugkanal automatisch zu verändern.

### Stand der Technik

Die Offenlegungsschrift DE 44 33 181 A1 zeigt einen Staubsauger, bei dem ein Dreipunktdruckschalter bestehend aus zwei Zweipunktdruckschaltern einen Integrator eines Regelkreises ansteuert, der einen Gebläsemotor abhängig vom sensierten Unterdruck ansteuert und so den Unterdruck auf einen Soll-Wert einregelt. Durch Verändern der Druckschalter kann abhängig von der Teppichbodenart ein anderer Soll-Wert gewählt werden.

Ein Staubsauger sowie ein Verfahren der eingangs genannten Art werden in der deutschen Patentschrift DE 43 04 263 C1 offenbart. Bei diesem vorbekannten Staubsauger ist im Strömungskanal stromauf des Sauggebläses ein Drucksensor angeordnet, welcher den Druck im Saugkanal misst und somit dessen Ist-Wert ermittelt. Dieses Signal wird mit einem werkseitig vorgegebenen Soll-Wert für den Unterdruck im Saugkanal verglichen. Die Vergleichsstelle ermittelt ein Fehlersignal, welches einem Mittel zur Regelung der Leistung des elektrisch betriebenen Sauggebläses zugeführt wird. Die Leistung des Elektromotors wird nachfolgend unter Einbeziehung eines Triacs so angepasst, dass der Ist-Wert des Unterdrucks im Saugkanal in Richtung des vorgegebenen Soll-Werts verändert wird. Bei einem Übergang von einem dichten Teppichboden auf einen glatten Untergrund wird somit automatisch eine Anpassung des Unterdrucks vorgenommen.

Derartige automatische Leistungsanpassungen, die üblicherweise als wählbare Alternative zu einer manuellen Einstellung der Leistung des Sauggebläses vorgesehen sind, haben sich in der Praxis grundsätzlich bewährt. Bei der Reinigung von Mischböden mit stark wechselnden Eigenschaften besteht jedoch die Möglichkeit, dass der vorgegebene Soll-Wert des Saugdrucks bei einem ersten Untergrund zwar ausreichend ist, um ein befriedigendes Reinigungsergebnis zu erzielen, bei einem Wechsel auf einen weiteren Untergrund hingegen zu hohen Verschiebekräften oder zu einer springenden Verlagerung der Saugdüse führt, welche vom Benutzer als unkomfortabel empfunden werden. Darüber hinaus besteht die Möglichkeit, dass lose auf einem Hartboden aufliegende Teppiche von der Saugdüse erfasst und ungewollt verschoben werden. Der Benutzer ist aus diesen Gründen unter Umständen gezwungen, den Automatikbetrieb des Staubsaugers zu verlassen und die Leistungsanpassung für jeden Untergrund gesondert manuell vorzunehmen.

Ein weiterer Staubsauger mit einer automatischen Anpassung des Unterdrucks ist aus der Offenlegungsschrift DE 10 2008 010 068 A1 bekannt. Bei diesem Staubsauger sind zwei Drucksensoren vorgesehen, welche einerseits den an der Saugdüse anliegenden Unterdruck und andererseits den Unterdruck im Eingangsbereich des Sauggebläses messen und dieses Signal jeweils eigenständigen Regelkreisen zuführen. Eine Regelungseinrichtung entscheidet, welcher der Regelkreise bei der konkreten Saugaufgabe die Regelung der Saugleistung übernimmt. Die Leistung des Sauggebläses wird erhöht, wenn der Staubfilterbeutel durch eine große Menge aufgenommenen Staubs einen erhöhten Strömungswiderstand aufweist. Darüber hinaus erfolgt eine Anpassung der Saugleistung dann, wenn die Saugdüse von einem harten Untergrund auf einen nachgiebigen Teppichboden wechselt und sich die zwischen Saugdüse und Boden widerstandsarm angesaugte Luftmenge verringert. Durch diese Ausbildung wird einerseits eine Anpassung der Saugleistung an unterschiedliche Bodenbeläge, weiterhin aber auch eine Veränderung in Abhängigkeit vom Füllgrad des Saugbeutels bewirkt. Die maximale Saugleistung kann in üblicher Weise über eine manuelle Leistungsverstellung begrenzt werden.

Aus der EP 0 379 680 A1 ist eine Vorrichtung zur automatischen Saugleistungssteuerung eines Staubsaugers bekannt mit einem Gebläse, einem Gebläseantriebsmotor und einer zugeordneten Ansteuerschaltung. Für letzteren wird vorgeschlagen, zwei auf unterschiedliche Unterdruck-Ansprechschwellwerte justierte Unterdruckschalter oder einen die beiden Unterdruck-Ansprechschwellwerte vorhergehenden Unterdruckdoppelschalter vorzusehen und über eine entsprechende Verknüpfung von deren Schaltzuständen einen Speicher (Zähler, Kondensator) anzusteuern, dessen Ausgangskonfigurationen für die Ansteuerung einer mit dem Gebläseantriebsmotor in Reihe liegenden Phasenanschnittsteuerung maßgebend sind. Hierdurch gelingt es, bei nur zwei vorhandenen Unterdruckschaltern den Gebläseantriebsmotor auf einem vorgegebenen Leistungsplateau ohne Umschaltungen zu betreiben, solange sich der erzeugte Unterdruck innerhalb eines vorgegebenen Fensters befindet.

Im Übrigen sei noch auf die US 6,255,792 B1 und die EP 1 997 412 A2 hingewiesen.

### Der Erfindung zugrundeliegende Aufgabe

Der Erfindung liegt die Aufgabe zugrunde, auch bei Mischböden mit erheblich unterschiedlichen Anforderungen an die Leistung des Sauggebläses eine komfortable Bedienung des Staubsaugers zu ermöglichen.

### Erfindungsgemäße Lösung

Die der Erfindung zugrunde liegende Aufgabe wird hinsichtlich des gattungsgemäßen Verfahrens dadurch gelöst,
- dass derjenige Saugzustand innerhalb des Saugauftrags ermittelt wird, welcher den geringsten Saugdruck erfordert,
- und dass nachfolgend der für diesen Saugzustand noch zulässige Saugdruck als Soll-Wert eingestellt wird.

Ein derart kritischer Saugzustand kann beispielsweise die Reinigung eines sehr weichen Teppichbodens oder eines lose auf einem glatten Untergrund aufliegenden Teppichs sein, während der Saugauftrag insgesamt auch weniger nachgiebige Teppichböden oder harte Untergründe umfasst.

Es ist ein erreichbarer Vorteil dieser Ausbildung, dass auch bei Saugaufträgen zur Reinigung von Mischböden, die sehr unterschiedliche Anforderungen an die Saugleistung stellen, eine komfortable Bedienung des Staubsaugers ermöglicht wird. Insbesondere kann vermieden werden, dass die Saugdüse ungewollt tief in nachgiebige Untergründe einsinkt und beim Verschieben über den Boden springt. Ferner wird die Wahrscheinlichkeit verringert, dass lose auf einem glatten Untergrund aufliegende Teppiche bei der Reinigung von der Saugdüse verschoben werden.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche. Bezugszeichen in den Ansprüchen sind nicht einschränkend zu verstehen sondern sollen lediglich der Lesbarkeit der Ansprüche dienen.

So ist aus Kostengründen vorteilhaft, dass die Einstellung des Soll-Werts des Saugdrucks manuell erfolgt.

Weiterhin ist mit Vorteil vorgesehen, dass das Mittel zur Verstellung des Soll-Werts des Saugdrucks ein Potentiometer ist. Auch dieses Bauteil ist preiswert und weist eine günstige Raumforderung auf.

Ferner ist bevorzugt vorgesehen, dass das Mittel zur Verstellung des Soll-Werts des Saugdrucks mit einer drehverstellbaren Handhabe wirkverbunden ist. Derartige Handhaben sind mechanisch robust, lassen sich optisch ansprechend in das Gehäuse des Staubsaugers einfügen und sind intuitiv bedienbar. Darüber hinaus führt die Kombination mit einem Drehpotentiometer zu einer preisgünstigen und raumsparenden Anordnung. Alternativ können zu einem Drehpotentiometer auch Schiebpotentiometer eingesetzt werden.

Darüber hinaus kann bevorzugt ein Drucksensor durch das Mittel zum Verstellen des Sollwerts des Saugdrucks ausgewählt werden.

Es ist hinsichtlich der Ausbildung des Staubsaugers bevorzugt, dass ein Drucksensor als analoge Unterdruckmessdose ausgebildet ist. Ein solches Messmittel ist preiswert, zuverlässig und erfordert nur einen geringen Bauraum, ist andererseits jedoch hinsichtlich seiner Genauigkeit für den vorliegenden Einsatzfall ausreichend. Darüber hinaus kann das analoge Ausgangssignal in besonders einfacher Weise in einem Regelkreis verarbeitet werden.

In einer bevorzugten Ausführung der Erfindung sind mehrere analoge oder auch digitale Drucksensoren, vorzugsweise mehrere digitale Unterdruckdosen vorgesehen. Besonders vorzugsweise sind die mehreren analogen oder auch digitalen Drucksensoren in der Weise jeweils mit unterschiedlichen Sollwerten voreingestellt, dass wenn das Regelungsmittel die Leistung des Sauggebläses in Abhängigkeit des von einem der Drucksensoren gemessenen Drucks regelt, sich der diesem Drucksensor zugeordneten Soll-Wert im Saugkanal einstellt. Diese verschiedenen Sensoren mit ihren jeweiligen Sollwerten könnten z.B. vorteilhafterweise über entsprechende Einstellungen des Potentiometers vom Benutzer angewählt werden.

Grundsätzlich ist allerdings nicht ausgeschlossen, diese Einstellung auch ganz oder teilweise zu automatisieren, beispielsweise durch einen vom höchsten zum tiefsten Wert abfallenden Saugdruck, bei welchem der noch als angenehm empfundene Unterdruck per Knopfdruck als Soll-Wert erfassbar ist.

Ferner kann die Soll-Wert-Forderung des Untergrunds auch durch Vermessen der Oberflächeneigenschaften vollautomatisch erfolgen, beispielsweise durch Abtasten.

Nach einer weiteren vorteilhaften Ausbildung der Erfindung kann die Einstellung des Soll-Werts des Saugdrucks stufenlos vorgesehen werden, wodurch eine besonders feine Anpassung des Soll-Werts des Saugdrucks an den jeweiligen Saugauftrag möglich ist.

Andererseits ist jedoch auch bevorzugt, dass die Einstellung des Soll-Werts des Saugdrucks in vorgegebenen Inkrementen vorgesehen ist. Hierdurch werden eine besondere hochwertige taktile Anmutung des Einstellmittels hervorgerufen und dessen Reaktionen kaum mehr spürbar.

Mit besonderem Vorteil ist vorgesehen, dass der Soll-Wert des Unterdrucks, also des absoluten Umgebungsdrucks abzüglich des absoluten Saugdrucks auf einen Wert von 30 mbar bis 140 mbar, insbesondere von 40 mbar bis 120 mbar, einstellbar ist. Während ein werkseitig vorgegebener Soll-Wert üblicherweise bei 75 mbar liegt und somit für anspruchsvolle Saugaufträge nur einen Kompromiss darstellt, können durch diesen Einstellbereich auch Mischböden mit stark unterschiedlichen Anforderungen an die Saugleistung zufriedenstellend gereinigt werden.

### Kurzbeschreibung der Figuren

Die Erfindung wird im Folgenden anhand schematischer Zeichnungen an zwei Ausführungsbeispielen mit weiteren Einzelheiten näher erläutert.

Es zeigen:
- Fig. 1:: eine seitliche Ansicht eines erfindungsgemäß ausgebildeten Staubsaugers mit schematischer Darstellung des Gehäuseinneren;
- Fig. 2:: ein Druck/Zeit-Diagramm bei der Benutzung des in Fig. 1 dargestellten Staubsaugers;
- Fig. 3:: einen alternativen Aufbau des Regelkreises eines erfindungsgemäßen Staubsaugers;
- Fig. 4:: ein Druck/Zeit-Diagramm bei einer manuellen Einstellung der Leistung des Sauggebläses nach dem Stand der Technik;
- Fig. 5:: eine schematische Darstellung wesentlicher Komponenten der zugehörigen Steuerung zum Diagramm nach Fig. 4;
- Fig. 6:: ein Druck/Zeit-Diagramm bei einer Regelung der Leistung des Sauggebläses bei fester Vorgabe des Soll-Werts des Saugdrucks nach dem Stand der Technik; und schließlich
- Fig. 7:: eine schematische Darstellung wesentlicher Komponenten der zugehörigen Regelung zum Diagramm nach Fig. 6.

### Ausführliche Beschreibung der Erfindung anhand von zwei Ausführungsbeispielen

Als Saugkanal im Sinne der vorliegenden Erfindung sind grundsätzlich alle Strömungskanäle anzusehen, welche stromaufwärts einer Staubabscheideeinrichtung des Staubsaugers angeordnet sind, also beispielsweise die Saugdüse, der Saugrohr, das Saugschlauch oder eine zwischen Saugschlauch und Abscheideeinrichtung befindliche Saugleitung im Gehäuse des Staubsaugers. Dabei ist die Abscheideeinrichtung in der Regel, aber nicht zwingend, zur Aufnahme eines Staubfilterbeutels vorgesehen. Alternativ kann es sich aber z.B. auch um einen Fliehkraft- oder Zyklonabscheider handeln.

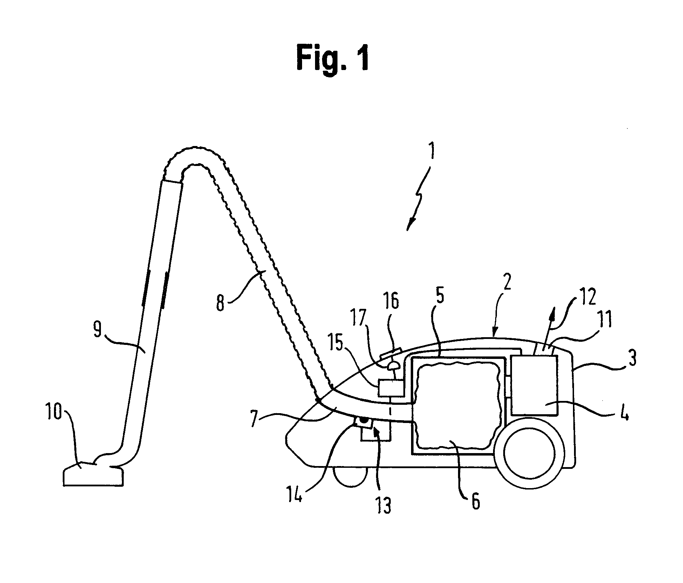

Der in Fig. 1 gezeigte Staubsauger 1 besteht aus einem Aggregateträger 2, dessen Gehäuse 3 ein elektromotorisch angetriebenes Sauggebläse 4 aufnimmt. Das Sauggebläse 4 ist stromaufwärts mit einer Abscheideeinrichtung 5 strömungsverbunden, welcher einen auswechselbaren Staubfilterbeutel 6 aufnimmt. In den Staubfilterbeutel 6 mündet ein in das Gehäuse 3 eingelassene Saugleitung 7 ein, die ihrerseits über einen flexiblen Saugschlauch 8 und ein teleskopierbares Saugrohr 9 mit einer Saugdüse 10 zusammenwirkt. Zur Reinigung von Bodenbelägen wird die Saugdüse 10 auf den zu säubernden Untergrund aufgesetzt und nach dem Einschalten des Sauggebläses 4 vor und zurück bewegt. Der auf dem Boden befindliche Staub wird zusammen mit bodennaher Luft in die Abscheideeinrichtung 5 gesaugt und im Staubfilterbeutel 6 abgeschieden, wobei sich im Strömungskanal zwischen Saugdüse 10 und Abscheideeinrichtung 5 ein Unterdruck ausbildet. Der gereinigte Luftstrom wird durch das Sauggebläse 4 geführt und entweicht durch eine Abluftöffnung 11 im Gehäuse 3 in Richtung des Pfeils 12.

In der Saugleitung 7 ist ein Drucksensor 13 in Form einer analogen Unterdruckmessdose 14 vorgesehen, welcher den im Strömungskanal stromauf des Abscheideeinrichtung 5 herrschenden Ist-Wert des Saugdrucks misst und an ein Regelungsmittel 15 meldet. Dort wird der Ist-Wert des Saugdrucks mit einen Soll-Wert für den Saugdruck verglichen und die Leistung des Sauggebläses 4 so angepasst, dass der Ist-Wert des Saugdrucks in Richtung seines Soll-Werts verändert wird. Dies kann beispielsweise durch eine Veränderung der Leistung des elektrischen Antriebs des Sauggebläses 4 geschehen.

Am Äußeren des Gehäuses 3 ist eine drehverstellbare Handhabe 16 angeordnet, welche für den Benutzer des Staubsaugers 1 bequem erreichbar ist und auf ein drehbares Potentiometer 17 wirkt. Durch Verstellen des Potentiometers 17 wird der Soll-Wert für den Saugdruck verändert, beispielsweise auf einen Unterdruck zwischen 40 mbar bis 120 mbar.

Bei der Reinigung unkritischer Bodenbeläge kann der Soll-Wert für den Saugdruck auf die üblichen 75 mbar eingestellt und der Saugvorgang ohne weitere Anpassung durchgeführt werden. Besteht der Saugauftrag hingegen aus der Reinigung von Mischböden mit stark unterschiedlichen Anforderungen an das Saugverhalten, wird die Saugdüse 10 zunächst auf denjenigen Bodenbelang aufgesetzt, der hinsichtlich seiner Unterdruckverträglichkeit besonders kritisch ist. Ausgehend von einem relativ niedrigen Saugdruck (also einem relativ hohen Unterdruck) wird dessen Soll-Wert nun soweit erhöht, dass sich ein Saugzustand einstellt, bei welchem ein Absaugen des kritischen Bodenbelags, beispielsweise eines nachgiebigen oder losen Teppichs, gerade noch bequem möglich ist. Beim späteren Absaugen unkritischer Untergründe wird die Leistung des Sauggebläses 4 dann stets so automatisch geregelt, dass sich die für den Saugauftrag insgesamt zulässige Untergrenze für den Saugdruck nicht unterschritten wird und sich somit an keinem Ort ein unzulässiger Saugzustand einstellt.

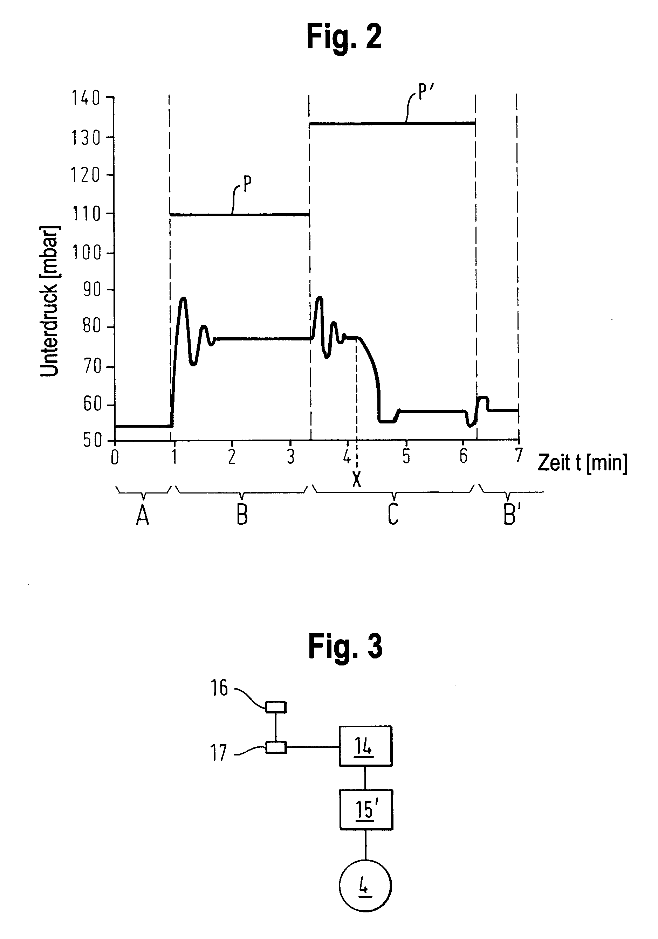

Fig. 2 zeigt den Ablauf des Saugvorgangs mit einem erfindungsgemäß ausgebildeten Staubsauger 1 einschließlich dieses Einstellvorgangs in einem Druck/Zeit-Diagramm. Der Saugauftrag beginnt mit der Reinigung eines glatten, unnachgiebigen und unkritischen Bodens (Saugzustand A) mit einer noch nicht optimierten Einstellung des Soll-Werts des Saugdrucks, wobei sich wegen des Einsaugens von Luft durch den Spalt zwischen Saugdüse 10 und Boden ein relativ geringer Unterdruck von etwa 55 mbar einstellt. Eine Erhöhung des Unterdrucks ist durch die begrenzte Leistung des Sauggebläses 4 nicht möglich und wegen des glatten Untergrunds auch nicht erforderlich.

Beim Auffahren auf einen weicheren, aber relativ luftdurchlässigen Teppich (Saugzustand B) wird der Unterdruck durch die verbesserte Abdichtung zur Saugdüse 10 erhöht, wobei das Regelungsmittel 15 weiterhin bei einer üblichen Soll-Wert-Einstellung von 75 mbar nach einem Einschwingvorgang einen Saugdruck herbeiführt, welcher mit einer komfortablen Verschiebekraft verbunden ist. Beim Wechsel auf einen kritischen, da relativ luftdichten Teppich (Saugzustand C) ist diese Einstellung jedoch ungünstig und wird zum Zeitpunkt X manuell auf einen Soll-Wert des Unterdrucks von etwa 60 mbar verstellt, bei welchen sich gerade noch eine komfortable Verschiebekraft ergibt.

Beim erneuten Auffahren auf den relativ luftdurchlässigen Teppich (Saugzustand B') wird immer noch ein zufriedenstellendes Saugergebnis bei weiterhin angenehm geringer Verschiebekraft erzielt. Mit P beziehungsweise P' ist im gleichen Diagramm der größtmögliche Unterdruck bezeichnet, welcher sich bei einer rein manuellen Einstellung der Leistung des Sauggebläses 4, also ohne einen Regelkreis, bei dem betreffenden Untergrund erreichen lässt. Im Ausführungsbeispiel beträgt der erreichbare maximale Unterdruck für den relativ luftdurchlässigen Teppich P=110 mbar und für den dichten Teppich P'= 135 mbar.

Fig. 3 zeigt einen Regelkreis, bei welchem die Einstellung durch die Handhabe 16 den Soll-Wert des Saugdrucks durch Veränderung des Schwellenwerts des Drucksensors 14 anpasst, wobei das Reglungsmittel (Controller 15') nur noch die Leistungsveränderung des elektrischen Antriebs des Sauggebläses 4 in Abhängigkeit des vom Drucksensor 14 übermittelten Fehlersignals bewirkt, jedoch nicht mehr den Ist-Wert des Saugdrucks mit dessen Soll-Wert vergleicht.

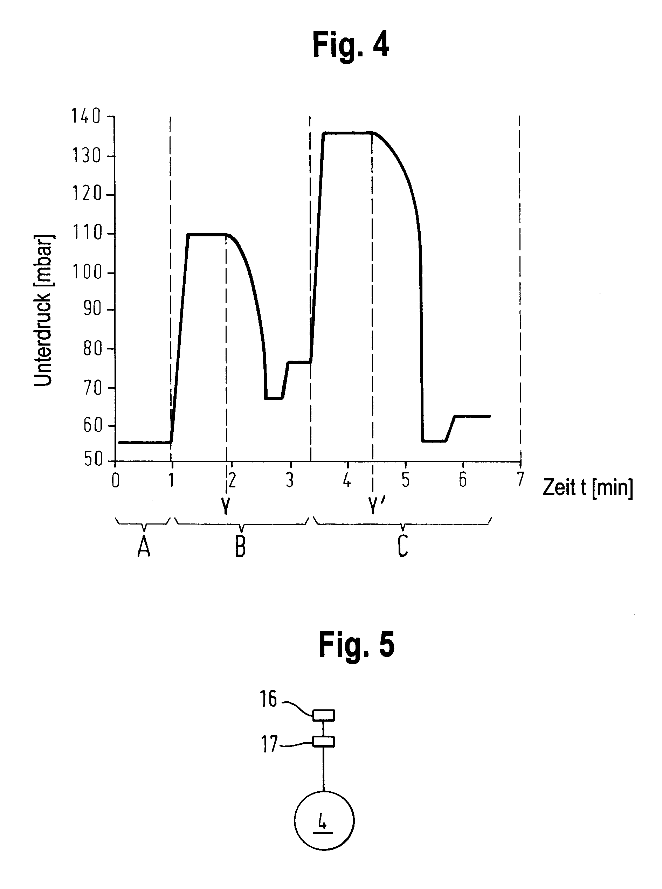

In Fig. 4 ist zum Vergleich der Ablauf des Saugauftrags für die Saugzustände A bis C bei einem ungeregelten Staubsauger 1 dargestellt, wobei vom Benutzer zu den Zeitpunkten Y und Y' manuell eine Verringerung der Leistung des Sauggebläses 4 vorgenommen wird, um die Verschiebekräfte der Saugdüse 10 auf ein erträgliches Maß abzusenken. Fig. 5 stellt die hierzu vorgesehenen Komponenten Handhabe 16, Potentiometer 17 und Sauggebläse 4 dar.

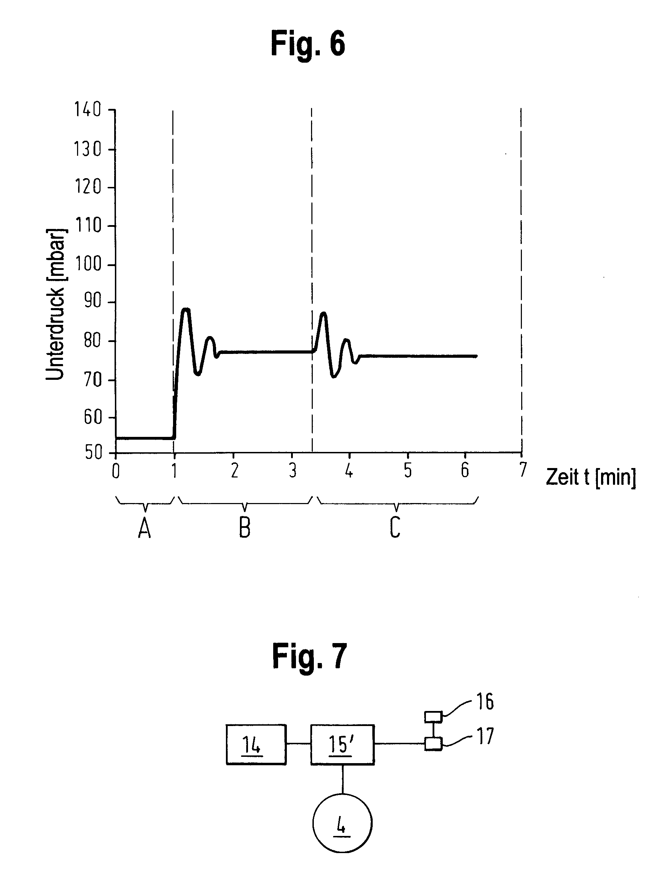

Ebenfalls zum Vergleich mit der erfindungsgemäßen Lösung ist in Fig. 6 der Druck/Zeitverlauf bei einem automatisch auf einen fest vorgegebenen Soll-Wert geregelten Staubsauger wiedergegeben, wobei sich im Saugzustand C des Saugauftrags, also bei der Reinigung eines kritisch dichten Teppichs, ein unkomfortabel hoher Verschiebewiderstand einstellt, welcher den Benutzer zu einem Umschalten auf eine ungeregelte, manuelle Leistungseinstellung des Sauggebläses 4 zwingt. Mittels der in Fig. 7 dargestellten Handhabe 16 der zugeordneten Komponenten ist eine Beeinflussung des Saugdrucks somit nur bei ausgeschaltetem Regelkreis möglich.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Insbesondere kann ein Staubsauger 1 mit
- einem Saugkanal und einem in diesem vorgesehenen Drucksensor 13 zum Messen eines Ist-Werts des Saugdrucks im Saugkanal,
- einem mit dem Saugkanal strömungsverbindbaren Sauggebläse 4 sowie
- einem Regelungsmittel 15, welches die Leistung des Sauggebläses 4 in Abhängigkeit vom gemessenen Druck auf einen Soll-Wert des Saugdrucks regelt,
- und der Mittel zur Verstellung des Soll-Werts des Saugdrucks aufweist,
sich dadurch auszeichnen, dass
- der Staubsauger 1 mehrere Drucksensoren mit unterschiedlichen voreingestellten Soll-Werten des Saugdrucks aufweist.

### Bezugszeichenliste

- 1: Staubsauger
- 2: Aggregateträger
- 3: Gehäuse
- 4: Sauggebläse
- 5: Abscheideeinrichtung
- 6: Staubfilterbeutel
- 7: Saugleitung
- 8: Saugschlauch
- 9: Saugrohr
- 10: Saugdüse
- 11: Abluftöffnung
- 12: Pfeil (Abluftstrom)
- 13: Drucksensor
- 14: Unterdruckmessdose
- 15: Regelungsmittel
- 15': Controller
- 16: Handhabe
- 17: Potentiometer

## Patentansprüche

1. Verfahren zum Betreiben eines Staubsaugers (1), bei welchem
- der Ist-Wert des Saugdrucks im Saugkanal gemessen
- und mit einem Soll-Wert des Saugdrucks verglichen wird
- und die Leistung des Sauggebläses (4) so geregelt wird, dass eine Änderung des Ist-Werts des Saugdrucks in Richtung des Soll-Werts des Saugdrucks erfolgt,
- und der Soll-Wert des Saugdrucks in Abhängigkeit von dem geforderten Saugauftrag eingestellt wird,
**dadurch gekennzeichnet,**
- **dass** zunächst derjenige Saugzustand innerhalb des Saugauftrags ermittelt wird, welcher den geringsten Saugdruck erfordert,
- und **dass** nachfolgend der für diesen Saugzustand noch zulässige Saugdruck als Soll-Wert eingestellt wird.

2. Verfahren nach Anspruch 1, **dadurch gekennzeichnet, dass** eine Einstellung des Soll-Werts des Saugdrucks manuell erfolgt.

3. Verfahren nach Anspruch 2, **dadurch gekennzeichnet, dass** als Mittel zur Verstellung des Soll-Werts des Saugdrucks ein Potentiometer (17) vorgesehen ist.

4. Verfahren nach Anspruch 3, **dadurch gekennzeichnet, dass** das Mittel zur Verstellung des Soll-Werts des Saugdrucks mit einer drehverstellbaren Handhabe (16) wirkverbunden ist.

5. Verfahren nach Anspruch 3 oder 4, **dadurch gekennzeichnet, dass** ein Drucksensor (13) durch das Mittel zum Verstellen des Sollwerts des Saugdrucks ausgewählt werden kann.

6. Verfahren nach Anspruch 5, **dadurch gekennzeichnet, dass** ein Drucksensor (13) als analoge Unterdruckmessdose (14) ausgebildet ist.

7. Verfahren nach Anspruch 5 oder 6, **dadurch gekennzeichnet, dass** mehrere analoge oder auch digitale Drucksensoren, vorzugsweise mehrere digitale Unterdruckdosen, vorgesehen sind.

8. Verfahren nach Anspruch 7, **dadurch gekennzeichnet, dass** die mehreren analogen oder auch digitalen Drucksensoren jeweils mit unterschiedlichen Sollwerten in der Weise voreingestellt sind, dass wenn das Regelungsmittel die Leistung des Sauggebläses in Abhängigkeit des von einem der Drucksensoren gemessenen Drucks regelt, sich der diesem Drucksensor zugeordneten Soll-Wert im Saugkanal einstellt.

9. Verfahren nach einem der vorherigen Ansprüche, **dadurch gekennzeichnet, dass** eine Einstellung des Soll-Werts des Saugdrucks ganz oder teilweise automatisiert erfolgt.

10. Verfahren nach Anspruch 9, **dadurch gekennzeichnet, dass** die Einstellung des Soll-Werts des Saugdrucks durch einen vom höchsten zum tiefsten Wert abfallenden Saugdruck erfolgt, bei welchem ein noch als angenehm empfundener Unterdruck per Knopfdruck als Soll-Wert erfassbar ist.

11. Verfahren nach einem der vorherigen Ansprüche, **dadurch gekennzeichnet, dass** die Soll-Wert-Forderung des Untergrunds durch Vermessen der Oberflächeneigenschaften vollautomatisch erfolgt.

12. Verfahren nach Anspruch 11, **dadurch gekennzeichnet, dass** die Soll-Wert-Forderung des Untergrunds durch Abtasten der Oberflächeneigenschaften erfolgt.

13. Verfahren nach einem der vorgehenden Ansprüche 1 bis 12, **dadurch gekennzeichnet, dass** die Einstellung des Soll-Werts des Saugdrucks stufenlos vorgesehen ist.

14. Verfahren nach einem der Ansprüche 1 bis 12, **dadurch gekennzeichnet, dass** die Einstellung des Soll-Werts des Saugdrucks in vorgegebenen Inkrementen vorgesehen ist.

15. Verfahren nach einem der vorhergehenden Ansprüche, **dadurch gekennzeichnet, dass** der Soll-Wert des Saugdrucks auf einen Unterdruck von 30 mbar bis 140 mbar, insbesondere von 40 mbar bis 120 mbar, einstellbar ist,

## Claims

1. Method for operating a vacuum cleaner (1), in which
- the actual value of the suction pressure is measured in the suction channel
- and is compared with a target value of the suction pressure
- and the output of the suction fan (4) is regulated such that a change in the actual value of the suction pressure takes place in the direction of the target value of the suction pressure,
- and the target value of the suction pressure is set as a function of the required applied suction,
**characterised in that**
- the suction state within the applied suction which requires the lowest suction pressure is determined first,
- and that the suction pressure still permissible for this suction state is then set as a target value.

2. Method according to claim 1, **characterised in that** the target value of the suction pressure is set manually.

3. Method according to claim 2, **characterised in that** a potentiometer (17) is provided as a means of adjusting the target value of the suction pressure.

4. Method according to claim 3, **characterised in that** the means of adjusting the target value of the suction pressure is actively connected to a rotatably-adjustable handle (16).

5. Method according to claim 3 or 4, **characterised in that** a pressure sensor (13) can be selected by the means of adjusting the target value of the suction pressure.

6. Method according to claim 5, **characterised in that** a pressure sensor (13) is embodied as an analogue low pressure cell (14).

7. Method according to claim 5 or 6, **characterised in that** a number of analogue or also digital pressure sensors, preferably a number of digital vacuum units, are provided.

8. Method according to claim 7, **characterised in that** the number of analogue or digital pressure sensors are each preset with different target values in such a way that if the regulating means regulates the output of the suction fan as a function of the pressure measured by one of the pressure sensors, the target value assigned to this pressure sensor is set in the suction channel.

9. Method according to one of the preceding claims, **characterised in that** the target value of the suction pressure is set in a completely or partially automated manner.

10. Method according to claim 9, **characterised in that** the target value of the suction pressure is set by a suction pressure falling from the highest to the lowest value, in which a low pressure still perceived to be pleasant can be detected as a target value at the push of a button.

11. Method according to one of the preceding claims, **characterised in that** the target value requirement of the ground takes place fully automatically by adjusting the surface properties.

12. Method according to claim 11, **characterised in that** the target value requirement of the ground takes place by scanning the surface properties.

13. Method according to one of the preceding claims 1 to 12, **characterised in that** provision is made to set the target value of the suction pressure in a continuous manner.

14. Method according to one of claims 1 to 12, **characterised in that** provision is made to set the target value of the suction pressure in predetermined increments.

15. Method according to one of the preceding claims, **characterised in that** the target value of the suction pressure can be set to a low pressure of 30 mbar to 140 mbar, in particular from 40 mbar to 120 mbar.

## Revendications

1. Procédé de fonctionnement d'un aspirateur (1), dans lequel
- la valeur réelle de la pression d'aspiration dans le canal d'aspiration est mesurée
- et est comparée à une valeur théorique de la pression d'aspiration
- et la performance du ventilateur d'aspiration (4) est réglée de manière à ce qu'une modification de la valeur réelle de la pression d'aspiration soit réalisée en direction de la valeur théorique de la pression d'aspiration,
- et que la valeur théorique de la pression d'aspiration soit réglée en fonction de l'instruction d'aspiration demandée,
**caractérisé en ce**
- **que** l'état d'aspiration situé dans les limites de l'instruction d'aspiration est d'abord déterminé, lequel nécessite la plus petite pression d'aspiration,
- et en ce qu'ensuite la pression d'aspiration encore admissible pour cet état d'aspiration est réglée comme valeur théorique.

2. Procédé selon la revendication 1, **caractérisé en ce qu'**un réglage de la valeur théorique de la pression d'aspiration est réalisé manuellement.

3. Procédé selon la revendication 2, **caractérisé en ce qu'**un potentiomètre (17) est ménagé comme moyen de réglage de la valeur théorique de la pression d'aspiration.

4. Procédé selon la revendication 3, **caractérisé en ce que** le moyen de réglage de la valeur théorique de la pression d'aspiration est en liaison active avec une manette (16) réglable par rotation.

5. Procédé selon la revendication 3 ou 4, **caractérisé en ce qu'**un capteur de pression (13) peut être sélectionné au moyen du moyen destiné à régler la valeur théorique de la pression d'aspiration.

6. Procédé selon la revendication 5, **caractérisé en ce qu'**un capteur de pression (13) est réalisé comme boîte analogique de mesure de sous-pression (14).

7. Procédé selon la revendication 5 ou 6, **caractérisé en ce que** plusieurs capteurs de pression analogiques ou aussi numériques, de préférence plusieurs boîtes numériques de sous-pression sont ménagées.

8. Procédé selon la revendication 7, **caractérisé en ce que** les plusieurs capteurs de pression analogiques ou aussi numériques sont respectivement préréglés avec des valeurs théoriques différentes de manière à ce que, lorsque le moyen de réglage règle la performance du ventilateur d'aspiration en fonction de la pression mesurée par l'un des capteurs de pression, la valeur théorique affectée à ce capteur de pression se règle dans le canal d'aspiration.

9. Procédé selon l'une quelconque des revendications précédentes, **caractérisé en ce qu'**un réglage de la valeur théorique de la pression d'aspiration est réalisé de manière entièrement automatisée ou en partie automatisée.

10. Procédé selon la revendication 9, **caractérisé en ce que** le réglage de la valeur théorique de la pression d'aspiration est réalisé par une pression d'aspiration décroissant de la valeur la plus élevée vers la valeur la plus basse, à laquelle une sous-pression ressentie comme encore agréable est détectable comme valeur théorique en appuyant sur un bouton.

11. Procédé selon l'une quelconque des revendications précédentes, **caractérisé en ce que** la demande de la valeur théorique du sol est réalisée entièrement automatiquement par mesure des caractéristiques de surface.

12. Procédé selon la revendication 11, **caractérisé en ce que** la demande de la valeur théorique du sol est réalisée par exploration des caractéristiques de surface.

13. Procédé selon l'une quelconque des revendications 1 à 12, **caractérisé en ce que** le réglage de la valeur théorique de la pression d'aspiration est ménagé de manière progressive.

14. Procédé selon l'une quelconque des revendications 1 à 12, **caractérisé en ce que** le réglage de la valeur théorique de la pression d'aspiration est ménagé par incréments prédéfinis.

15. Procédé selon l'une quelconque des revendications 1 à 12, **caractérisé en ce que** la valeur théorique de la pression d'aspiration est réglable sur une sous-pression de 30 mbar à 140 mbar, notamment de 40 mbar à 120 mbar.
